(19) Europäisches Patentamt
European Patent Office
Office européen des brevets

(11) EP 0 877 078 B1

(12) # EUROPÄISCHE PATENTSCHRIFT

(45) Veröffentlichungstag und Bekanntmachung des Hinweises auf die Patenterteilung:
**17.09.2003 Patentblatt 2003/38**

(51) Int Cl.[7]: **C11D 3/395**, C07D 213/74

(21) Anmeldenummer: **98107528.6**

(22) Anmeldetag: **24.04.1998**

(54) **Bleichaktive Metall-Komplexe**

Bleach activating metal complex

Complexe métallique comme activateur de blanchiment

(84) Benannte Vertragsstaaten:
**AT BE CH DE DK ES FR GB IT LI NL PT SE**

(30) Priorität: **07.05.1997 DE 19719397**

(43) Veröffentlichungstag der Anmeldung:
**11.11.1998 Patentblatt 1998/46**

(73) Patentinhaber: **Clariant GmbH**
**65929 Frankfurt am Main (DE)**

(72) Erfinder: **Nestler, Bernd, Dr.**
**65929 Frankfurt (DE)**

(56) Entgegenhaltungen:
**WO-A-91/14694** **DE-A- 19 529 905**

- **LARROW J F ET AL: "A PRACTICAL METHOD FOR THE LARGE-SCALE PREPARATION OF N,N'-BIS (3,5-DI-TERT-BUTYLSALICYLIDENE)-1,2-CYCL OH EXANEDIAMINATO(2-) MANGANESE(III) CHLORIDE, A HIGHLY ENANTIOSELECTIVE EPOXIDATION CATALYST" JOURNAL OF ORGANIC CHEMISTRY, Bd. 59, Nr. 7, 8. April 1994, Seiten 1939-1942, XP000508269**
- **BÖTTCHER A ET AL: "A novel synthetic approach to asymmetric salen, dihydrosalen, and tetrahydrosalen ligands" Z. NATURFORSCHUNG, Nr. 49b, 1994, XP002087896**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 877 078 B1

## Beschreibung

Es ist bekannt, daß sich das Bleichvermögen peroxidischer Bleichmittel in Wasch- und Reinigungsmitteln, wie Wasserstoffperoxid, Perboraten, Percarbonaten, Persilikaten und Perphosphaten und somit die Effizienz dieser Bleichmittel zur Entfernung von Tee-, Kaffee-, Obst- oder Rotweinflecken erst bei höheren Temperaturen von deutlich über 60 °C voll entfaltet. Zur Verbesserung der bei niedrigeren Temperaturen, vor allem unter 60 °C, stark herabgesetzten Bleichwirkung können Verbindungen zur Aktivierung der Peroxidbleichmittel eingesetzt werden. Für diesen Zweck wurden eine Reihe von Übergangsmetallsalzen bzw. entsprechende Komplexe mit meist chelatisierenden Verbindungen vorgeschlagen, doch ist die Wirksamkeit eines Metalls bzw. einer speziellen Kombination von Übergangsmetall und Komplexligand nicht voraussagbar.

Solche Metall-Komplexe zur Aktivierung von Peroxyverbindungen sind beschrieben in US 4728455, US 5314635, US 5244594, US 5114611, US 5114606, EP 549272, EP 544519, EP 544490, EP 544440, EP 509787, EP 458398, WO 9615136, EP 717 103, EP 630 964, EP 408 131, WO 95/30681.

Aus J. Inorg. Nucl. Chem. 1975, Vol. 37, pp. 2005 - 2006 sind auch neutrale Metallkomplexe mit Bis-(2-hydroxybenzyliden)-2,6-pyridindiamin als Ligand bekannt.

Gegenstand der vorliegenden Erfindung sind bisher nicht bekannte Verbindungen der allgemeinen Formel I

$$[L_nM_mX_p]^zY_q \qquad (1)$$

wobei

| | |
|---|---|
| M | Mangan in der Oxidationsstufe II, III, IV, V und/oder VI oder Eisen in der Oxidationsstufe II und/oder III, |
| X | eine Koordinations- oder Brückengruppe, |
| Y | ein Gegenion in der entsprechenden stöchiometrischen Menge zum Ausgleich einer vorhandenen Ladung z, wobei |
| z | als Ladung des Metall-Komplexes positiv, null oder negativ sein kann, |
| n und m | unabhängig voneinander ganze Zahlen von 1 bis 4, |
| p | eine ganze Zahl von 0 bis 15, |
| q | z/Ladung von Y |
| L | einen Liganden der Formel (2) |

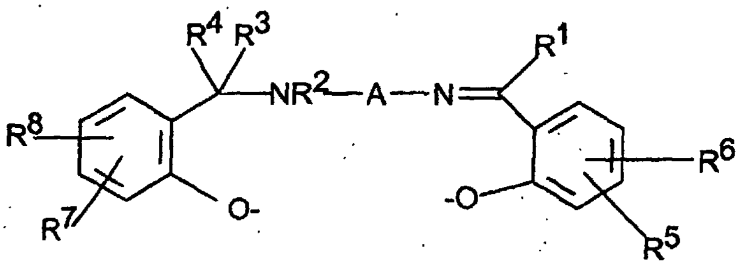

(2)

bedeutet, wobei

| | |
|---|---|
| $R^1$, $R^2$, $R^3$, $R^4$ | unabhängig voneinander Wasserstoff, $C_1$- bis $C_{10}$-Alkyl-, Cycloalkyl- oder Arylreste, |
| $R^5$, $R^6$, $R^7$, $R^8$ | unabhängig voneinander Wasserstoff, $C_1$- bis $C_{30}$-Alkyl-, Cycloalkyl- oder Arylreste, $C_1$- bis $C_4$-Alkoxygruppen, substituierte oder unsubstituierte Amino- bzw. Ammoniumgruppen, Halogenatome, Sulfogruppen, Carboxylgruppen, oder Gruppierungen der Formel $-(CH_2)_r-COOH$, $-(CH_2)_r-SO_3H$, $-(CH_2)_r-PO_3H_2$, $-(CH_2)_l-OH$ bedeuten, wobei r und l eine ganze Zahl von 0 bis 4 bedeuten und die genannten Säuregruppen auch in Salzform vorliegen können, |
| und A | eine $C_2$-$C_4$-Alkylen-, $C_5$-$C_{10}$-Cycloalkylen- oder Arylengruppe bedeutet. |
| X | ist vorzugsweise eine der folgenden Gruppen: $F^-$, $Cl^-$, $Br^-$, $SCN^-$, $OH^-$, $O_2^{2-}$, $O^{2-}$, $O_2^-$, $HOO^-$, $R^9OO^-$, $H_2O$, $SH^-$, $CN^-$, $OCN^-$, $S^{2-}$, $N_3^-$, $NH_3$, $NR^9_3$, $NR^9_2^-$, $R^9O^-$, $R^9COO^-$, $R^9SO_3^-$ und $R^9SO_4^-$, wobei $R^9$ jeweils für Wasserstoff, $C_1$- bis $C_8$-Alkyl, Cycloalkyl oder $C_6$- bis $C_{18}$-Aryl steht. Das Gegenion Y ist vorzugsweise ein Ion |

der folgenden Formeln:

- bei positivem z: $F^-$, $Cl^-$, $Br^-$, $NO_3^-$, $ClO_4^-$, $SCN^-$, $PF_6^-$, $R^9SO_4^-$, $R^9COO^-$, $R^9SO_3^-$, $BF_4^-$, $BPh_4^-$, $SO_4^{2-}$ und $SO_4^{2-}$;
- bei negativem z: $Li^+$, $Na^+$, $K^+$, $Mg^{2+}$, $Ca^{2+}$, $Al^{3+}$, $NH_4^+$, $R^9NH_3^+$, $R^9_2NH_2^+$, $R^9_3NH^+$ und $R^9_4N^+$,

wobei $R^9$ die zuvor genannte Bedeutung hat.

| | |
|---|---|
| M | ist vorzugsweise Mangan, |
| $R^1$, $R^2$, $R^4$, $R^7$ und $R^8$ | sind bevorzugt Wasserstoff, |
| $R^3$ | ist bevorzugt Wasserstoff oder Methyl |
| $R^5$ | ist bevorzugt $C_1$-$C_4$-Alkyl, $C_1$-$C_4$-Alkoxy oder eine substituierte oder unsubstituierte Amino- bzw. Ammoniumgruppe, insbesondere Di-$C_1$-$C_4$-Alkylamino-Gruppen, |
| $R^6$ | ist bevorzugt Wasserstoff oder Methyl und |
| A | ist bevorzugt Ethylen und Cyclohexylen. |

Die Liganden der Formel 2 werden hergestellt durch Umsetzung von N-(2-Hydroxybenzyl)-diamino-Verbindungen mit entsprechend substituierten Salicylaldehyden analog zu den Angaben in A. Böttcher et al., Z. Naturforsch. 49b, 1089 - 1100 (1994). Die Herstellung der erfindungsgemäßen Metallkomplexe durch Umsetzung von Mn-, oder Fe-Salzen mit diesen Liganden erfolgt ebenfalls analog zu den Angaben dieser Literaturstelle.

Die erfindungsgemäßen ein- oder mehrkernigen Komplexe der allgemeinen Formel 1 eignen sich hervorragend als Bleich- und Oxidationskatalysatoren, insbesondere in Wasch- und Reinigungsmitteln und bei der Textil- und Papierbleiche. Besonders hervorzuheben sind hier Textilwaschmittel in Form von Pulverwaschmitteln oder als flüssige Formulierungen und Geschirreinigungsmittel. Ein Vorteil der erfindungsgemäßen Bleichkatalysatoren ist hierbei ihre Stabilität gegen Hydrolyse und Oxidation sowie ihre katalytische Wirkung bereits bei niedrigen Temperaturen. Sie verbessern in solchen Formulierungen nicht nur die Bleichwirkung von Wasserstoffperoxid, sondern auch von organischen und anorganischen Peroxy-Verbindungen.

Gegenstand der vorliegenden Erfindung ist demgemäß auch ein Verfahren zum Bleichen von verschmutzten Substraten, wobei man das verschmutzte Substrat in wäßriger Bleichflotte mit Peroxyverbindungen und einer wirksamen Menge eines oder mehrerer der erfindungsgemäßen Metall-Komplexe als Bleichkatalysatoren in Kontakt bringt.

Dabei enthält die wäßrige Bleichflotte vorzugsweise diese Metall-Komplexe, bezogen auf das Gewicht der Bleichflotte, in einer Menge von 0,001 bis 100 ppm Metall, insbesondere 0,01 bis 50 ppm Metall, vor allem 0,03 bis 20 ppm Metall (ppm bedeutet parts per million, bezogen auf das Gewicht). Höhere Gehalte an Metallkomplexen, etwa bis zu 500 ppm, können bei industriellen Bleichprozessen, beispielsweise auf dem Textil- oder Papiersektor, zweckmäßig sein. Die zuerst genannten niedrigen Metall-Gehalte beziehen sich vornehmlich auf Haushaltstextilwaschmittel.

Gegenstand der Erfindung ist auch die Verwendung dieser Bleichkatalysatoren in bleichenden Wasch- und Reinigungsmitteln. Diese Wasch- und Reinigungsmittel enthalten neben einer Peroxidverbindung oder einer peroxidfreisetzenden Verbindung und dem Bleichkatalysator üblicherweise auch oberflächenaktive Verbindungen und weitere bekannte Inhaltsstoffe.

Geeignete Peroxide bzw. peroxidfreisetzende Verbindungen sind Alkalimetallperoxide, organische Peroxide wie Harnstoff-Wasserstoffperoxid-Addukte, und anorganische Persalze, wie die Alkaliperborate, percarbonate, -perphosphate, -persilikate und -persulfate. Besonders bevorzugt sind Natriumperborat-Tetrahydrat und insbesondere Natriumperborat-Monohydrat. Natriumperborat-Monohydrat ist wegen seiner guten Lagerbeständigkeit und seiner guten Löslichkeit in Wasser bevorzugt. Natriumpercarbonat kann aus Umweltschutzgründen bevorzugt sein. Alkylhydroperoxide sind eine weitere geeignete Gruppe von Peroxidverbindungen. Beispiele für diese Stoffe sind Cumolhydroperoxid und t-Butylhydroperoxid. Auch aliphatische oder aromatische Mono- oder Dipercarbonsäuren sowie die entsprechenden Salze eignen sich als Peroxyverbindungen. Beispiele hierfür sind Peroxy-$\alpha$-naphthoesäure, Peroxylaurinsäure, Peroxystearinsäure, N,N-Phthaloylaminoperoxycapronsäure, 1,12-Diperoxydodecandisäure, 1,9-Diperoxyazelainsäure, Diperoxysebacinsäure, Diperoxyisophthalsäure, 2-Decyldiperoxybutan-1,4-disäure und 4,4'-Sulfonylbisperoxybenzoesäure. Weiterhin eignen sich als Peroxyverbindungen anorganische Peroxysäure-Salze, z. B. Kaliummonopersulfat. Mischungen aus zwei oder mehreren dieser Verbindungen sind ebenfalls geeignet.

Die erfindungsgemäßen Wasch- und Reinigungsmittel-Formulierungen enthalten üblicherweise 1 bis 30 Gew.-%, insbesondere 2 bis 25 Gew.-% an Peroxyverbindungen.

Neben den Peroxyverbindungen können die Wasch- und Reinigungsmittel zusätzlich auch sogenannte Bleichaktivatoren in üblichen Mengen (ca. 1 bis 10 Gew.-%) enthalten.

Beispiele für solche Bleichaktivatoren sind Verbindungen mit quaternären Ammonium-Strukturen wie beispielsweise 2-(N,N,N-Triethylammonio)ethyl-4-sulfophenylcarbonat, N-Octyl-N,N-dimethyl-N-10-carbophenoxydecylammoniumchlorid, 3-(N,N,N-Trimethylammonio)-propyl-Natrium-4-sulfophenylcarboxylat und N,N,N-Trimethylammonium-toluyl-oxybenzolsulfonat.

Neben den oben genannten quaternären Ammoniumsalzen sind Ester wie z. B. Acylphenolsulfonate und der Acylalkylphenolsulfonate sowie Acylamide als Bleichaktivator bevorzugt. Von besonderem Interesse sind hierbei die in der Praxis gerne eingesetzten Verbindungen Natrium-4-benzoyloxybenzol-sulfonat, N,N,N',N'-Tetraacetylethylendiamin (TAED), Natrium-1-methyl-2-benzoyloxy-benzol-4-sulfonat, Natrium-4-methyl-3-benzoyloxybenzoat, Natriumnonanoyloxybenzol-sulfonat, Natrium-3,5,5-trimethylhexanoyloxybenzo-sulfonat, Benzoylcaprolactam, 2-Phenylbenz-(4H)1,3-oxazin-4-on, Glucosepentaacetat und Tetraacetylxylose aber auch Ketone sowie nitrilische Aktivatoren.

Als wirksame Menge der Metall-Komplexe der Formel 1 sind üblicherweise Mengen von 0,0001 bis 0,5 Gew.-% Metall, insbesondere 0,00025 bis 0,25 Gew.-% Metall, vor allem 0,0005 bis 0,1 Gew.-% Metall, bezogen auf das Gewicht der Formulierungen, in diesen Wasch- und Reinigungsmittelformulierungen enthalten. Diese Mengen können je nach landesüblichen Gepflogenheiten leicht schwanken.

Die oberflächenaktive Substanz in den Wasch- und Reinigungsmitteln kann von Naturprodukten abgeleitet sein, wie etwa Seife, oder ist eine synthetische Verbindung aus der Gruppe der anionischen, nichtionischen, amphoteren, (zwitterionischen) oder kationischen oberflächenaktiven Substanzen, oder Mischungen aus diesen. Viele geeignete Substanzen sind kommerziell erhältlich, und sind in der Literatur beschrieben, beispielsweise in "Surface active agents and detergents", Vol. 1 und 2, von Schwartz, Perry und Berch. Der Gesamtanteil der oberflächenaktiven Verbindungen kann bis zu 50 Gew.-% betragen, vorzugsweise 1 Gew.-% bis 40 Gew.-%, insbesondere 4 Gew.-% bis 25 Gew.-% des gesamten Wasch- oder Reinigungsmittels betragen.

Synthetische anionische oberflächaktive Substanzen sind üblicherweise wasserlösliche Alkalimetallsalze organische Sulfate und Sulfonate mit Alkylresten von etwa 8 bis 22 Kohlenstoffatomen, wobei der Ausdruck "Alkyl" die Alkylsubstituenten höherer Arylreste einschließt

Beispiele geeigneter anionischer Detergentien sind Natrium- und Ammoniumalkylsulfonate, speziell die durch Sulfatierung höherer ($C_8$ bis $C_{18}$) Alkohole erhaltenen Sulfate; Natrium- und Ammoniumalkylbenzolsulfonate mit einem Alkylrest von $C_9$ bis $C_{20}$, insbesondere lineare sekundäre Natriumalkylbenzolsulfonate mit einem Alkylrest von $C_{10}$ bis $C_{15}$; Natriumalkylglycerinethersulfate, besonders die Ester der höheren, von Talg- und Kokosnußöl abgeleiteten Alkohole; die Natriumsulfate und -sulfonate der Kokosfettsäuremonoglyceride; Natrium- und Ammoniumsalze der Schwefelsäureester höherer ($C_9$ bis $C_{18}$) oxalkylierter, insbesondere der mit Ethylenoxid oxalkylierten Fettalkohole; die Reaktionsprodukte der Veresterung von Fettsäuren mit Isethionsäure und nachfolgender Neutralisierung mit Natriumhydroxid; Natrium- und Ammoniumsalze der Fettsäureamide des Methyltaurins; Alkan-Monosulfonate wie diejenigen aus der Reaktion von $\alpha$-Olefinen ($C_8$-$C_{20}$) mit Natriumbisulfit und diejenigen aus der Reaktion von Paraffinen mit $SO_2$ und $Cl_2$ mit anschließender basischer Hydrolyse, wobei ein Gemisch verschiedener Sulfonate entsteht; Natrium- und Ammoniumdialkylsulfosuccinate mit Alkylresten von $C_7$ bis $C_{12}$; und Olefinsulfonate, die bei der Reaktion von Olefinen, insbesondere $C_{10}$- bis $C_{20}$-$\alpha$-Olefinen, mit $SO_3$ und nachfolgender Hydrolyse der Reaktionsprodukte entstehen. Die bevorzugten anionischen Detergentien sind Natriumalkylbenzolsulfonate mit Alkylresten von $C_{15}$ bis $C_{18}$, und Natriumalkylethersulfate mit Alkylresten von $C_8$ bis $C_{18}$.

Beispiele für geeignete nichtionische oberflächenaktive Verbindungen, die bevorzugt zusammen mit anionischen oberflächenaktiven Verbindungen benutzt werden, sind insbesondere die Reaktionsprodukte von Alkylenoxiden (gewöhnlich Ethylenoxid) mit Alkylphenolen (Alkylreste von $C_5$ bis $C_{22}$), wobei die Reaktionsprodukte im allgemeinen 5 bis 25 Ethylenoxid (EO)-Einheiten im Molekül enthalten; die Reaktionsprodukte aliphatischer ($C_8$ bis $C_{18}$) primärer oder sekundärer, linearer oder verzweigter Alkohole mit Ethylenoxid, mit im allgemeinen 6 bis 30 EO, und die Additionsprodukte von Ethylenoxid an Reaktionsprodukte aus Propylenoxid und Ethylendiamin. Andere nichtionische oberflächenaktive Verbindungen sind Alkylpolyglycoside, langkettige tertiäre Aminoxide, langkettige tertiäre Phosphinoxide und Dialkylsulfoxide.

Amphotere oder zwitterionische oberflächenaktive Verbindungen können ebenfalls in den erfindungsgemäßen Zusammensetzungen verwendet werden, was aber wegen deren hoher Kosten meistens nicht erwünscht ist. Wenn amphotere bzw. zwitterionische Verbindungen verwendet werden, so geschieht das in der Regel in kleinen Mengen in Zusammensetzungen, die hauptsächlich anionische und nichtionische Tenside enthalten.

Auch Seifen können in den erfindungsgemäßen Zusammensetzungen verwendet werden, vorzugsweise mit einem Anteil von weniger als 25 Gew.-%. Sie sind besonders geeignet in geringen Mengen in binären (Seife/nichtionisches Tensid) oder in temären Mischungen zusammen mit nichtionischen oder gemischten synthetischen anionischen und nichtionischen Tensiden. Die verwendeten Seifen sind bevorzugt die Natriumsalze, und weniger bevorzugt die Kaliumsalze gesättigter und ungesättigter $C_{10}$- bis $C_{24}$-Fettsäuren, oder deren Mischungen. Die Anteile solcher Seifen können von 0,5 Gew.-% bis 25 Gew.-% betragen, geringere Mengen von 0,5 Gew.-% bis 5 Gew.-% sind im allgemeinen ausreichend zur Schaumkontrolle. Seifenanteile zwischen etwa 2 % und etwa 20 %, besonders zwischen etwa 5 % und etwa 10 %, haben einen positiven Effekt. Dieses ist besonders der Fall in hartem Wasser, wo die Seife als zusätzliche Buildersubstanz dient.

Die Wasch- und Reinigungsmittel enthalten im allgemeinen auch einen Builder. Als Builder kommen in Betracht: Calcium-bindende Stoffe, Fällungsmittel, Calcium-spezifische Ionenaustauscher und deren Mischungen. Beispiele für Calcium-bindende Stoffe umfassen Alkalimetallpolyphosphate, wie Natriumtripolyphosphat; Nitrilotriessigsäure und ihre wasserlöslichen Salze; die Alkalimetallsalze der Carboxymethyloxybernsteinsäure, Ethylendiamintetraessigsäure, Oxydibersteinsäure, Mellithsäure, Benzopolycarbonsäuren, Zitronensäure; und Polyacetalcarboxylate, wie in U. S. Pat. 4144226 und 4146495 offenbart. Beispiele für Fällungsmittel sind Natriumorthophosphat, Natriumcarbonat und Seifen aus langkettigen Fettsäuren.

Beispiele für Ionenaustauscher, die für Calcium spezifisch sind, sind die verschiedenen Arten von wasserunlöslichen, kristallinen oder amorphen Aluminiumsilicate, von denen die Zeolithe die bekanntesten Vertreter sind.

Die Buildersubstanzen können von 5 Gew.-% bis 80 Gew.-% vorhanden sein, bevorzugt ist ein Anteil von 10 Gew.-% bis 60 Gew.-%.

Neben den bereits erwähnten Inhaltsstoffen können die Wasch- und Reinigungsmittel konventionelle Zusatzstoffe in Mengen enthalten, die man üblicherweise in solchen Mitteln vorfindet. Beispiele hierfür sind Schaumbildner, wie etwa Alkanolamide, besonders die Monoethanolamide aus Palmkernöl-Fettsäuren und Kokosnuß-Fettsäuren; schaumverhindernde Substanzen, wie etwa Alkylphosphate und -silicone; Vergrauungsinhibitoren und ähnliche Hilfsmittel, wie etwa Natriumcarboxymethylcellulose und Alkyl- oder substituierte Alkylcelluloseether; Stabilisatoren, wie Ethylendiamintetraessigsäure; Weichmacher für Textilien; anorganische Salze, wie Natriumsulfat; und, in üblicherweise kleinen Mengen, fluoreszierende Stoffe, Parfüme, Enzyme wie Proteasen, Cellulasen, Lipasen und Amylasen, Desinfektionsmittel und Farbstoffe. Die Bleichkatalysatoren dieser Erfindung können in einer Vielzahl von Produkten eingesetzt werden. Diese umfassen Textilwaschmittel, Textilbleichmittel, Oberflächenreiniger, Toilettenreiniger, Geschirrspülmaschinenreiniger, und auch Gebißreiniger. Die Waschmittel können in fester Form oder flüssiger Form vorliegen.

Es ist aus Gründen der Stabilität und Handhabbarkeit vorteilhaft, die Bleichaktivatoren in Form von Granulaten zu verwenden, die neben dem Bleichkatalysator ein Bindemittel enthalten. Verschiedene Methoden, solche Granulate herzustellen, sind in der Patentliteratur beschrieben, so beispielsweise in Kanada Pat. Nr. 1102966, GB 1561333, US 4087369, EP 240057, EP 241962, EP 101634 und EP 62523.

Die die erfindungsgemäßen Bleichkatalysatoren enthaltenden Granulate werden im allgemeinen der Waschmittelzusammensetzung zusammen mit den anderen, trockenen Bestandteilen wie etwa Enzymen, anorganischen Peroxidbleichmitteln zugesetzt. Die Waschmittelzusammensetzung, zu der die Katalysatorgranulate zugegeben werden, kann auf verschiedenen Wegen erhalten werden, wie etwa Mischen der trockenen Komponenten, Extrudieren, Sprühtrocknung.

In einer weiteren Ausführungsform sind die erfindungsgemäßen Bleichkatalysatoren besonders geeignet für nicht-wäßrige flüssige Waschmittel, zusammen mit einer bleichenden Peroxidverbindung, etwa Natriumperborat, um dem Waschmittel ein großes Reinigungsvermögen für Gewebe und Textilien zu verleihen. Derartige nicht-wäßrige, flüssige Waschmittel, die pastöse und gelatinöse Detergentien zusammensetzungen mit einschließen, sind beispielsweise in US 2864770, US 2940938, US 4772412, US 3368977, GB 1205711, GB 1370377, GB 1270040, GB 1292352, GB 2194536, DE 2233771, EP 28849 beschrieben. Es handelt sich dabei um Zusammensetzungen in Form eines nichtwäßrigen, flüssigen Mediums, in dem eine feste Phase dispergiert sein kann. Das nicht wäßrige, flüssige Medium kann eine flüssige, oberflächenaktive Substanz sein, vorzugsweise eine nichtionische oberflächenaktive Substanz, ein nicht polares flüssiges Medium wie etwa flüssiges Paraffin, ein polares Lösungsmittel, wie etwa Polyole, zum Beispiel Glycerin, Sorbitol, Ethylenglycol, eventuell in Verbindung mit niedermolekularen einwertigen Alkoholen wie Ethanol oder Isopropanol oder Mischungen daraus.

Die feste Phase kann aus Buildersubstanzen, Alkalien, abrasiven Stoffen, Polymeren und festen ionischen oberflächenaktiven Verbindungen, Bleichmitteln, fluoreszierenden Stoffen und anderen üblichen festen Inhaltsstoffen bestehen.

Die folgenden Beispiele sollen einen Überblick über die Ausführungsformen der Erfindung geben.

Beispiel 1: N-(2-Hydroxybenzyl)-N'-(2-hydroxybenzyliden)-1,2-diaminoethan-Mangan-Komplex

Eine Lösung von 39,2 g N-(2-Hydroxybenzyl)-1,2-diaminoethan [hergestellt in Anlehnung an: A. Böttcher et al., Z. Naturforsch. 49b, 1089 - 1100 (1994)] in 100 ml Isopropanol wurde mit 28,7 g Salicylaldehyd versetzt und die erhaltene Lösung zwei Stunden unter Rückfluß zum Sieden erhitzt. Beim Abkühlen der Lösung fiel ein Feststoff aus, Umkristallisation aus Isopropanol ergab 49,8 g N-(2-Hydroxybenzyl)-N'-(2-hydroxybenzyliden)-1,2-diaminoethan. 1,35 g der so erhaltenen Verbindung wurden in 60 ml Ethanol gelöst und portionsweise 1,22 g Mangan-(II)-acetat (Tetrahydrat) zugegeben. Nach zweistündigem Rühren in der Siedehitze wurde das Solvens am Rotationsverdampfer (Wasserstrahlvakuum) entfernt und der Rückstand mit heißem Isopropanol gewaschen. Zurück blieben 1,6 g N-(2-Hydroxybenzyl)-N'-(2-hydroxybenzyliden)-1,2-diaminoethan-Mangan-Komplex in Form eines dunkelbraunen amorphen Feststoffs.

Beispiel 2: N-(2-Hydroxybenzyl )-N'-(2-hydroxybenzyliden)-1,2-diaminoethan-Mangan-Komplex

Der N-(2-Hydroxybenzyl)-N'-(2-hydroxybenzyliden)-1,2-diaminoethan-Mangan-Komplex wurde wie in Beispiel 1 beschrieben synthetisiert; dabei wurde in der Umsetzung Mangan-(III)-acetat (Dihydrat) anstelle von Mangan-(II)-acetat (Tetrahydrat) eingesetzt.

Beispiel 3: N-(2-Hydroxybenzyl)-N'-(2-hydroxybenzyliden)-1,2-diaminocyclohexan-Mangan-Komplex

Entsprechend Beispiel 1 wurde aus N-(2-Hydroxybenzyl)-1,2-diaminocyclohexan der N-(2-Hydroxybenzyl)-N'-(2-hydroxybenzyliden)-1,2-diaminocyclohexan-Mangan-Komplex hergestellt.

Beispiel 4: N-(2-Hydroxybenzyl)-N'-(2-hydroxybenzyliden)-N-methyl-1,2-diaminoethan-Mangan-Komplex

Zu einer Lösung von 16,2 g N-(2-Hydroxybenzyl)-N'-(2-hydroxybenzyliden)-1,2-diaminoethan, 10,1 g Natriumhydrogencarbonat, 60 ml Wasser und 60 ml Essigsäureethylester wurden bei Raumtemperatur innerhalb von 20 min 8,87 g Dimethylsulfat zugetropft. Nach 2,5 h fortgesetztem Rühren wurden 30 ml 25 % wäßrige Ammoniaklösung zugesetzt und 1 h stehengelassen. Nun wurde mit 10 % Salzsäure auf pH 8 gebracht, der ausgefallene Feststoff abfiltriert und mit wenig Essigester gewaschen. Die organische Phase der zusammengegebenen Filtrate wurde abgetrennt, die wäßrige Phase mit 2 x 60 ml Essigester extrahiert und die vereinigten Phasen über Natriumsulfat getrocknet. Nach Entfernen des Solvens im Vakuum und Umkristallisation aus Ethanol wurden 10,4 g N-(2-Hydroxybenzyl)-N'-(2-hydroxybenzyliden)-N-methyl-1,2-diaminoethan in Form eines gelben, kristallinen Feststoffs erhalten.
Zu einer Lösung von 2,13 g dieser Verbindung in 25 ml Ethanol wurden portionsweise 1,84 g Mangan-(II)-acetat (Tetrahydrat) zugesetzt und 2 h unter Rückfluß zum Sieden erhitzt. Nach Abkühlen der Reaktionslösung wurde das Solvens im Vakuum entfernt und der N-(2-Hydroxybenzyl)-N'-(2-hydroxybenzyliden)-N-methyl-1,2-diaminoethan-Mangan-Komplex aus dem Rückstand mit Methylenchlorid extrahiert; erhalten wurden 3,01 g schwarzbraune Kristalle.

In analoger Weise wurde die folgenden Metallkomplexe hergestellt. Soweit diese Metallkomplexe Kobalt oder Eisen enthalten, wurden die Verbindungen ausgehend von Kobalt-(II)-acetat (Tetrahydrat) bzw. Eisen-(II)-acetat hergestellt.

Beispiel 5: N-(2-Hydroxybenzyl)-N'-(3,5-ditert.butyl-2-hydroxybenzyliden)-1,2-diaminoethan-Mangan-Komplex

Beispiel 6: N-(2-Hydroxybenzyl)-N'-(4-diethylamino-2-hydroxybenzyliden)-1,2-diaminoethan-Mangan-Komplex

Beispiel 7: N-(2-Hydroxybenzyl)-N'-(2-hydroxy-4-methoxybenzyliden)-1,2-diaminoethan-Mangan-Komplex

Beispiel 8: N-(2-Hydroxybenzyl)-N'-(2-hydroxy-3-methoxybenzyliden)-1,2-diaminoethan-Mangan-Komplex

Beispiel 9: N-(2-Hydroxybenzyl)-N'-(2-hydroxy-5-nitrobenzyliden)-1,2-diaminoethan-Mangan-Komplex

Beispiel 10: N-(2-Hydroxybenzyl)-N'-(3,5-ditert.butyl-2-hydroxybenzyliden)-1,2-diaminocyclohexan-Mangan-Komplex

Beispiel 11: N-(2-Hydroxybenzyl)-N'-(3,5-ditert.butyl-2-hydroxybenzyliden)-N-methyl-1,2-diaminoethan-Mangan-Komplex

Beispiel 12: N-(2-Hydroxybenzyl)-N'-(2-hydroxy-4-methoxybenzyliden)-N-methyl-1,2-diaminoethan-Mangan-Komplex

Beispiel 16: N-(2-Hydroxybenzyl)-N'-(2-hydroxybenzyliden)-1,2-diaminoethan-Eisen-Komplex

Beispiel 17: N-(2-Hydroxybenzyl)-N'-(3,5-ditert.butyl-2-hydroxybenzyliden)-1,2-diaminoethan-Eisen-Komplex

Beispiel 18: N-(2-Hydroxybenzyl)-N'-(2-hydroxy-5-nitrobenzyliden)-1,2-diaminoethan-Eisen-Komplex

Bleichversuche

Durch Zusammengeben von 200 ml einer wäßrigen Lösung Referenzwaschmittel WMP (Wäschereiforschungsinstitut Krefeld, 5 g/l in Wasser mit 15° dH) Lösung, 150 mg Natriumperborat-Monohydrat, 50 mg Tetraethylendiamin (TAED) und 2 mg des jeweiligen Katalysators wurde eine Bleichmittelzusammensetzung hergestellt. Mit dieser Zusammensetzung wurden mit Standardanschmutzungen (BC-1-Tee oder 10P-Paprika auf Baumwolle, Wäschereiforschungsinstitut Krefeld) verschmutzte Gewebestücke in einem Linitest-Gerät (Heraeus) einer Behandlung bei einer Temperatur von 40 °C unter isothermen Waschbedingungen unterworfen. Nach einer dreißigminütigen Waschzeit wurden die Gewebestücke mit Wasser gespült, getrocknet und gebügelt; anschließend wurde die Bleichwirkung durch eine Bestimmung der Differenzen $\Delta R_{(KAT-TAED)}$ der Remissionen vor und nach dem Bleichen mittels eines Weißgrad-Meßgerätes ELREPHO 2000 (Firma Datacolor) quantifiziert. Aus diesen $\Delta R_{(KAT-TAED)}$-Werten und den in Kontrollversuchen ohne Bleichkatalysator ermittelten $\Delta R_{(TAED)}$-Werten wurden die in Tabelle 1 (Standardanschmutzung BC-1-Tee) und Tabelle 2 (Standardanschmutzung 10P-Paprika) aufgelisteten ΔΔ R-Werte berechnet, die einen direkten Maßstab für die durch den Zusatz an Katalysator hervorgerufene Verbesserung der Bleichwirkung darstellen:

$$\Delta\Delta R = \Delta R_{(Kat-TAED)} - \Delta R_{(TAED)}$$

Tabelle 1:

| Katalysator aus Beispiel-Nr. | 1 | 3 | 4 | 5 | 6 | 7 | 8 | 9 | 10 | 11 | 12 | 13 |
|---|---|---|---|---|---|---|---|---|---|---|---|---|
| ΔΔ R | 2,9 | 3,1 | 2,9 | 2,5 | 5,4 | 3,7 | 3,6 | 3,9 | 3,0 | 3,1 | 3,1 | 2,2 |

Tabelle 2:

| Katalysator aus Beispiel-Nr. | 14* | 15* | 16 | 17 | 18 |
|---|---|---|---|---|---|
| ΔΔR | 5,3 | 0,1 | 0,4 | 1,0 | 0,1 |

*Nicht erfindungsgemäße Kobalt Komplexe

Weitere vorteilhafte Eigenschaften der beschriebenen Komplexe sind geringe Farbschädigung und geringe Faserschädigung.

**Patentansprüche**

**1.** Verbindungen der allgemeinen Formel 1

$$[L_nM_mX_p]^zY_q \quad (1)$$

worin

| | |
|---|---|
| M | Mangan in der Oxidationsstufe II, III, IV, V und/oder VI oder Eisen in der Oxidationsstufe II und/oder III, |
| X | eine Koordinations- oder Brückengruppe, |
| Y | ein Gegenion in der entsprechenden stöchiometrischen Menge zum Ausgleich einer vorhandenen Ladung z, wobei |
| z | als Ladung des Metall-Komplexes positiv, null oder negativ sein kann, |
| n und m | unabhängig voneinander ganze Zahlen von 1 bis 4, |
| p | eine ganze Zahl von 0 bis 15, |
| q | z/Ladung von Y |
| L | einen Liganden der Formel (2) |

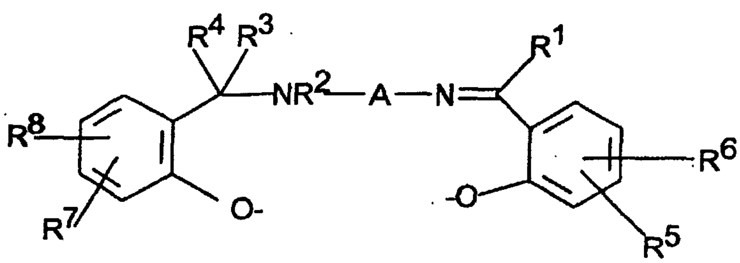

(2)

bedeutet, wobei

$R^1, R^2, R^3, R^4$ unabhängig voneinander Wasserstoff, einen $C_1$- bis $C_{10}$-Alkyl-, Cycloalkyl- oder Arylrest,
$R^5, R^6, R^7, R^8$ unabhängig voneinander Wasserstoff, $C_1$- bis $C_{30}$-Alkyl-, Cycloalkyl- oder Arylreste, $C_1$- bis $C_4$-Alkoxygruppen, substituierte oder unsubstituierte Amino- bzw. Ammoniumgruppen, Halogenatome, Sulfogruppen, Carboxylgruppen, oder Gruppierungen der Formel $-(CH_2)_r-COOH$, $-(CH_2)_r-SO_3H$, $-(CH_2)_r-PO_3H_2$, $-(CH_2)_l-OH$ bedeuten, wobei r und l eine ganze Zahl von 0 bis 4 bedeutet und die genannten Säuregruppen auch in Salzform vorliegen können, und A eine $C_2$-$C_4$-Alkylen-, $C_5$-$C_{10}$-Cycloalkylen- oder Arylengruppe bedeutet.

2. Verbindungen der Formel 1 nach Anspruch 1, wobei X $F^-$, $Cl^-$, $Br^-$, $SCN^-$, $OH^-$, $O_2^{2-}$, $O^{2-}$, $O_2^-$, $HOO^-$, $R^9OO^-$, $H_2O$, $SH^-$, $CN^-$, $OCN^-$, $S^{2-}$, $N_3^-$, $NH_3$, $NR^9_3$, $NR^9_2^-$, $R^9O^-$, $R^9COO^-$, $R^9SO_3^-$ und $R^9SO_4^-$, ist wobei $R^9$ jeweils Wasserstoff, $C_1$- bis $C_8$-Alkyl, Cyloalkyl oder $C_6$- bis $C_{18}$-Arylrest bedeutet.

3. Verbindungen der Formel 1 nach Anspruch 1 wobei das Gegenion Y $F^-$, $Cl^-$, $Br^-$, $NO_3^-$, $ClO_4^-$, $SCN^-$, $PF_6^-$, $R^9SO_4^-$, $R^9COO^-$, $R^9SO_3^-$, $BF_4^-$, $BPh_4^-$, $SO_4^{2-}$ und $SO_4^{2-}$, $Li^+$, $Na^+$, $K^+$, $Mg^{2+}$, $Ca^{2+}$, $Al^{3+}$, $NH_4^+$, $R^9NH_3^+$, $R^9_2NH_2^+$, $R^9_3NH^+$ und $R^9_4N^+$ bedeutet und $R^9$ die in Anspruch 2 genannte Bedeutung hat.

4. Verbindungen der Formel 1 nach Anspruch 1, wobei A eine Ethylengruppe oder Cyclohexylengruppe bedeutet.

5. Verbindungen der Formel 1 nach Anspruch 1 bis 3, wobei $R^1$, $R^2$, $R^3$, $R^4$, $R^6$, $R^7$ und $R^8$ Wasserstoff und $R^5$ $C_1$-$C_4$-Alkyl, $C_1$-$C_4$-Alkoxy oder eine substituierte oder unsubstituierte Amino- oder Ammoniumgruppe.

6. Verbindungen der Formel 1 nach Anspruch 1, wobei $R^1$, $R^2$, $R^3$, $R^4$, $R^6$, $R^7$ und $R^8$ Wasserstoff und $R^5$ eine Di-$C_1$-$C_4$-alkylamino-Gruppe bedeutet.

7. Verbindungen der Formel 1 nach Anspruch 1, wobei M Mangan in der Oxidationsstufe II, III, IV, V oder VI bedeutet, m und n jeweils für die Zahl 1 stehen und p eine ganze Zahl von 0 bis 3 bezeichnet.

8. Verbindungen der Formel 1 nach Anspruch 1, wobei M Mangan in der Oxidationsstufe II oder III bedeutet, m und n jeweils für die Zahl 1 stehen und p eine ganze Zahl von 0 bis 3 bezeichnet.

9. Verbindungen der Formel 1 nach Anspruch 1, wobei M Mangan in der Oxidationsstufe II, III, IV, V und/oder VI bedeutet m für die Zahl 2, n für die Zahl 1 oder 2 und p für eine ganze Zahl von 0 bis 5 steht.

10. Verbindungen der Formel 1 nach Anspruch 1, wobei M Mangan in der Oxidationsstufe II und/oder III bedeutet, m für die Zahl 2, n für die Zahl 1 oder 2 und p für eine ganze Zahl von 0 bis 5 steht.

11. Verwendung der Verbindungen der Formel 1 gemäß Anspruch 1 als Bleich- und Oxidationskatalysatoren.

12. Verwendung der Verbindungen der Formel 1 gemäß Anspruch 1 als Bleich- und Oxidationskatalysatoren in Wasch- und Reinigungsmitteln und bei der Textil- und Papierbleiche.

## Claims

1. A compound of the formula 1

$$[L_nM_mX_p]^zY_q \qquad (1)$$

in which

M is manganese in oxidation state II, III, IV, V and/or VI, or iron in oxidation state II and/or III,
X is a coordination group or bridging group,
Y is a counterion in the corresponding stoichiometric amount to balance a charge z present, where
z as the metal complex charge can be positive, zero or negative,
n and m, independently of one another, are integers from 1 to 4,
p is an integer from 0 to 15,

q is z/charge of Y

L is a ligand of the formula (2)

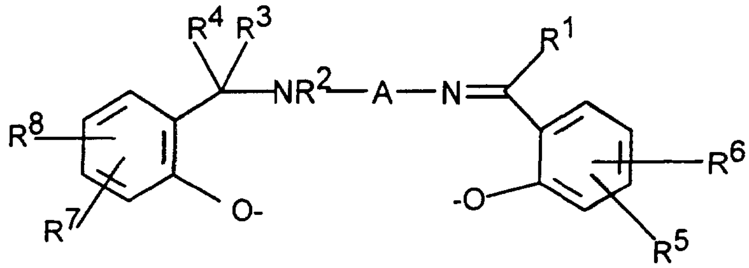

(2)

in which

$R^1$, $R^2$, $R^3$ and $R^4$ independently of one another are hydrogen, a $C_1$- to $C_{10}$-alkyl, cycloalkyl or aryl radical,

$R^5$, $R^6$, $R^7$, $R^8$ independently of one another are hydrogen, $C_1$- to $C_{30}$-alkyl, cycloalkyl or aryl radicals, $C_1$- to $C_4$-alkoxy groups, substituted or unsubstituted amino or ammonium groups, halogen atoms, sulfo groups, carboxyl groups, or groups of the formula $-(CH_2)_r-COOH$, $-(CH_2)_r-SO_3H$, $-(CH_2)_r-PO_3H_2$, $-(CH_2)_l-OH$, in which r and l are integers from 0 to 4, and the specified acid groups may also be in salt form, and A is a $C_2$-$C_4$-alkylene, $C_5$-$C_{10}$-cycloalkylene or arylene group.

**2.** A compound of the formula 1 as claimed in claim 1, in which X is $F^-$, $Cl^-$, $Br^-$, $SCN^-$, $OH^-$, $O_2^{2-}$, $O^{2-}$, $O_2^-$, $HOO^-$, $R^9OO^-$, $H_2O$, $SH^-$, $CN^-$, $OCN^-$, $S^{2-}$, $N_3^-$, $NH_3$, $NR^9_3$, $NR^9_2^-$, $R^9O^-$, $R^9COO^-$, $R^9SO_3^-$ and $R^9SO_4^-$, in which $R^9$ is in each case hydrogen, $C_1$- to $C_8$-alkyl, cycloalkyl or $C_6$- to $C_{18}$-aryl.

**3.** A compound of the formula 1 as claimed in claim 1 in which the counterion Y is $F^-$, $Cl^-$, $Br^-$, $NO_3$-, $ClO_4^-$, $SCN^-$, $PF_6^-$, $R^9SO_4^-$, $R^9COO^-$, $R^9SO_3^-$, $BF_4^-$, $BPh_4^-$, $SO_4^{2-}$ and $SO_4^{2-}$; $Li^+$, $Na^+$, $K^+$, $Mg^{2+}$, $Ca^{2+}$, $Al^{3+}$, $NH_4^+$, $R^9NH_3^+$, $R^9_2NH_2^+$, $R^9_3NH^+$ and $R^9_4N^+$, and $R^9$ is as defined in claim 2.

**4.** A compound of the formula 1 as claimed in claim 1, in which A is an ethylene group or cyclohexylene group.

**5.** A compound of the formula 1 as claimed in claims 1 to 3, in which $R^1$, $R^2$, $R^3$, $R^4$, $R^6$, $R^7$ and $R^8$ are hydrogen, and $R^5$ is a $C_1$-$C_4$-alkyl, $C_1$-$C_4$-alkoxy or a substituted or unsubstituted amino or ammonium group.

**6.** A compound of the formula 1 as claimed in claim 1, in which $R^1$, $R^2$, $R^3$, $R^4$, $R^6$, $R^7$ and $R^8$ are hydrogen, and $R^5$ is a di-$C_1$-$C_4$-alkylamino group.

**7.** A compound of the formula 1 as claimed in claim 1, in which M is manganese in oxidation state II, III, IV, V or VI, m and n are each 1 and p is an integer from 0 to 3.

**8.** A compound of the formula 1 as claimed in claim 1, in which M is manganese in oxidation state II or III, m and n are each 1 and p is an integer from 0 to 3.

**9.** A compound of the formula 1 as claimed in claim 1, in which M is manganese in oxidation state II, III, IV, V and/or VI, m is 2, n is 1 or 2 and p is an integer from 0 to 5.

**10.** A compound of the formula 1 as claimed in claim 1, in which M is manganese in oxidation state II and/or III, m is 2, n is 1 or 2 and p is an integer from 0 to 5.

**11.** The use of the compounds of the formula 1 as claimed in claim 1 as bleach catalysts and oxidation catalysts.

**12.** The use of the compounds of the formula 1 as claimed in claim 1 as bleach catalysts and oxidation catalysts in

laundry detergents and cleaning products and in textile and paper bleaching.

**Revendications**

1. Composés de formule générale 1

$$[L_nM_mX_p]^zY_q \qquad (1)$$

dans laquelle

M représente le manganèse dans l'état d'oxydation II, III, IV ou V et/ou VI ou le fer dans l'état d'oxydation II et/ou III,
X représente un groupe de coordination ou un groupe pontant,
Y représente un contre-ion dans la quantité stoechiométrique correspondant à l'équilibrage de la charge z présente, dans lesquels
z comme charge du complexe métallique, peut être positive, nulle ou négative,
n et m représentent indépendamment l'un de l'autre des nombres entiers de 1 à 4,
p représente un nombre entier de 0 à 15,
q représente z/la charge de Y,
L représente un ligand de formule (2)

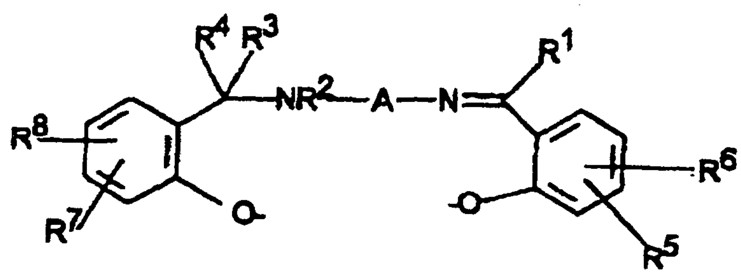

(2)

dans laquelle

$R^1$, $R^2$, $R^3$, $R^4$ représentent indépendamment les uns des autres un atome d'hydrogène, un groupe alkyle en $C_1$ à $C_{10}$, cycloalkyle ou aryle,
$R^5$, $R^6$, $R^7$, $R^8$ représentent indépendamment les uns des autres un atome d'hydrogène, un groupe alkyle en $C_1$ à $C_{30}$, cycloalkyle ou aryle, un groupe alcoxy en $C_1$ à $C_4$, un groupe amino ou ammonium substitué ou non substitué, un atome d'halogène, un groupe sulfo, un groupe carboxyle, ou un groupe de formule $-(CH_2)_r-COOH$, $-(CH_2)_r-SO_3H$, $-(CH_2)_r-PO_3H_2$, $-(CH_2)_l-OH$, dans lesquels r et l représentent un nombre entier de 0 à 4 et les groupes acide cités peuvent également se présenter sous forme de sels, et A représente un groupe alkylène en $C_2$ à $C_4$, cycloalkylène en $C_5$ à $C_{10}$ ou arylène.

2. Composés de formule 1 selon la revendication 1, dans lesquels X est $F^-$, $Cl^-$, $Br^-$, $SCN^-$, $OH^-$, $O_2^{2-}$, $O^{2-}$, $O_2^-$, $HOO^-$, $R^9OO^-$, $H_2O$, $SH^-$, $CN^-$, $OCN^-$, $S^{2-}$, $N_3^-$, $NH_3$, $NR^9_3$, $NR^9_2^-$, $R^9O^-$, $R^9COO^-$, $R^9SO_3^-$ et $R^9SO_4^-$, $R^9$ représentant respectivement un atome d'hydrogène, un groupe alkyle en $C_1$ à $C_8$, cycloalkyle ou aryle en $C_6$ à $C_{18}$.

3. Composés de formule 1 selon la revendication 1, dans lesquels le contre-ion Y représente $F^-$, $Cl^-$, $Br^-$, $NO_3^-$, $ClO_4^-$, $SCN^-$, $PF_6^-$, $R^9SO_4^-$, $R^9COO^-$, $R^9SO_3^-$, $BF_4^-$, $BPh_4^-$ et $SO_4^{2-}$ ; $Li^+$, $Na^+$, $K^+$, $Mg^{2+}$, $Ca^{2+}$, $Al^{3+}$, $NH_4^+$, $R^9NH_3^+$, $R^9_2NH_2^+$, $R^9_3NH^+$ et $R^9_4N^+$ et $R^9$ a la signification indiquée à la revendication 2.

4. Composés de formule 1 selon la revendication 1, dans lesquels A représente un groupe éthylène ou un groupe cyclohexylène.

**5.** Composés de formule 1 selon les revendications 1 à 3, dans lesquels $R^1$, $R^2$, $R^3$, $R^4$, $R^6$, $R^7$ et $R^8$ représentent un atome d'hydrogène et $R^5$ représente un groupe alkyle en $C_1$ à $C_4$, alcoxy en $C_1$ à $C_4$ ou un groupe amino ou ammonium substitué ou non substitué.

**6.** Composés de formule 1 selon la revendication 1, dans lesquels $R^1$, $R^2$, $R^3$, $R^4$, $R^6$, $R^7$ et $R^8$ représentent un atome d'hydrogène et $R^5$ représente un groupe di-alkyle en $C_1$ à $C_4$-amino.

**7.** Composés de formule 1 selon la revendication 1, dans lesquels M représente le manganèse dans l'état d'oxydation II, III, IV, V ou VI, m et n représentent respectivement le nombre 1 et p désigne un nombre entier de 0 à 3.

**8.** Composés de formule 1 selon la revendication 1, dans lesquels M représente le manganèse dans l'état d'oxydation II ou III, m et n représentent respectivement le nombre 1 et p désigne un nombre entier de 0 à 3.

**9.** Composés de formule 1 selon la revendication 1, dans lesquels M représente le manganèse dans l'état d'oxydation II, III, IV, V et/ou VI, m représente le nombre 2, n représente le nombre 1 ou 2 et p un nombre entier de 0 à 5.

**10.** Composés de formule 1 selon la revendication 1, dans lesquels M représente le manganèse dans l'état d'oxydation II ou III, m représente le nombre 2, n représente le nombre 1 ou 2 et p un nombre entier de 0 à 5.

**11.** Utilisation des composés de formule 1 selon la revendication 1 comme catalyseurs de blanchiment et d'oxydation.

**12.** Utilisation des composés de formule 1 selon la revendication 1 comme catalyseurs de blanchiment et d'oxydation dans des lessives et des détergents et dans le blanchiment du textile et du papier.